# EUROPÄISCHE PATENTANMELDUNG

(11) **EP 4 663 073 A1**
(43) Veröffentlichungstag der Anmeldung: **17.12.2025**
(21) Anmeldenummer: 25178697.6
(22) Anmeldetag: 26.05.2025
(51) Int. Cl.: A47D 13/02, B62B 9/14

(54) **TRANSPORTEINHEIT**

(30) Priorität: 10.06.2024 DE 102024116142; 02.07.2024 DE 102024118677
(71) Anmelder: Emmaljunga Holding AB, 28268 Vittsjö (SE)
(72) Erfinder: Persson, Christian, 28267 Vittsjö (SE)
(74) Vertreter: Müller Schupfner & Partner Patent- und Rechtsanwaltspartnerschaft mbB (Muc)

(57) **Zusammenfassung**

Die Erfindung betrifft eine Transporteinheit, insbesondere zum Einsatz in einem Kindertransportsystem, aufweisend eine Seitenwand mit einem ersten Stirnabschnitt, wobei vorzugsweise am ersten Stirnabschnitt ein Ventilationsbereich vorgesehen ist, welcher luftdurchlässiger ausgebildet ist, als die benachbarten Bereiche der Seitenwand, wobei eine Abdeckung an der Seitenwand festlegbar oder festgelegt ist, welche in einem geschlossenen Zustand den Ventilationsbereich abdeckt und in einem offenen Zustand den Ventilationsbereich zumindest bereichsweise freigibt, wobei die Abdeckung im offenen Zustand derart an der Seitenwand, vorzugsweise am Stirnabschnitt, geformt und festgelegt ist, dass sie einen Puffer bildet.

## Beschreibung

Die vorliegende Erfindung betrifft eine Transporteinheit, insbesondere einer Transporteinheit eines Kindertransportsystems.

Transporteinheiten für Kindertransportsysteme sind aus dem Stand der Technik bereits bekannt. Dabei ist es auch bekannt, an Transporteinheiten, wie beispielsweise Babyschalen, Bereiche vorzusehen, an denen eine Belüftung des Innenraums der Transporteinheit erfolgen kann. Gleichzeitig ist es im Stand der Technik auch bekannt, die für die Belüftung vorgesehenen Bereiche verschließen bzw. abdecken zu können, wobei oft textiles Material, aus welchem auch der übrige Bereich der Transporteinheit hergestellt ist, als Abdeckung zum Einsatz gelangt. Bei den aus dem Stand der Technik bekannten Transporteinheiten hat aber die Abdeckung keinen weiteren Nutzen, und ist insbesondere dann, wenn sie in einen Zustand gebracht wurde, in welchem die Belüftungsöffnung offen ist, oft im Weg.

Aufgabe der vorliegenden Erfindung ist es, der Abdeckung einer Belüftungsöffnung einer Transporteinheit weitere vorteilhafte Eigenschaften zu verleihen, um insbesondere die Sicherheit der Transporteinheit zu erhöhen.

Diese Aufgabe wird gelöst mit einer Transporteinheit gemäß Anspruch 1. Weitere vorteilhafte Merkmale und Ausführungsformen ergeben sich aus den abhängigen Ansprüchen.

Erfindungsgemäß ist eine Transporteinheit, insbesondere zum Einsatz in einem Kindertransportsystem, vorgesehen, aufweisend eine Seitenwand mit einem ersten Stirnabschnitt, wobei vorzugsweise am ersten Stirnabschnitt ein Ventilationsbereich vorgesehen ist, welcher luftdurchlässiger ausgebildet ist, als die benachbarten Bereiche der Seitenwand, wobei eine Abdeckung an der Seitenwand festlegbar oder festgelegt ist, welche in einem geschlossenen Zustand den Ventilationsbereich abdeckt und in einem offenen Zustand den Ventilationsbereich zumindest bereichsweise freigibt, wobei die Abdeckung im offenen Zustand derart an der Seitenwand, vorzugsweise am Stirnabschnitt, geformt und festgelegt ist, dass sie einen Puffer bildet. Der für die vorliegende Erfindung wesentliche Bereich an der Transporteinheit ist die Seitenwand, und insbesondere deren Stirnabschnitt, in welchem ein Ventilationsbereich vorgesehen ist, durch welchen Luft leichter zirkulieren kann. Dieser Ventilationsbereich ist im Stirnbereich der Seitenwand angeordnet was vorteilhaft ist da dort üblicherweise der Kopf eines zu transportierenden Kindes liegt. Um, insbesondere bei niedrigen Temperaturen, den Ventilationsbereich verschließen zu können ist eine Abdeckung vorgesehen, welche im geschlossenen Zustand den Ventilationsbereich abdeckt und somit die Luftzirkulation im Wesentlichen unterbindet. Im offenen Zustand ist die Abdeckung derart geformt, dass sie den Ventilationsbereich nicht abdeckt und gleichzeitig einen Puffer bildet. Der Puffer ist dabei als zusätzlicher Schutz vorgesehen und dient gewissermaßen als zusätzliche Knautschzone im Stirnbereich der Transporteinheit. Auf diese Weise kann die Sicherheit für ein in der Transporteinheit zu transportierendes Kind besonders einfach erhöht werden. Die Doppelfunktion der Abdeckung als Abdeckung der Ventilationsöffnung im geschlossenen Zustand und im geöffneten Zustand als Puffer sorgt dabei für eine deutliche Verbesserung der Sicherheit der Transporteinheit. Kombiniert mit der Anordnung der Abdeckung und damit des Puffers im Stirnbereich der Transporteinheit, wo insbesondere der empfindliche Kopf eines zu transportierenden Kindes angeordnet ist, wird in dieser besonders wichtigen Zone die Sicherheit erhöht. Die Abdeckung ist vorzugsweise aus demselben Gewebe oder Stoff ausgebildet wie die Außenhaut der Seitenwand. Weiterhin kann, insbesondere dann, wenn ein mehrschichtiger Aufbau der Seitenwand vorgesehen ist, mit außenliegenden, stabilen Stoffgewebeschichten und innenliegende Isolierung, dieser mehrschichtige Aufbau auch für die Abdeckung Anwendung finden.

In einer Ausführungsform ist die Abdeckung im Wesentlichen um eine Querachse gerollt und/oder gefaltet, um als Puffer ausgebildet zu sein. Besonders bevorzugt ist es dabei, dass die Abdeckung um eine Querachse, welche vorzugsweise im Einsatz der Transporteinheit im Wesentlichen horizontal steht, gefaltet oder gewickelt ist, derart dass ein sich überwiegend parallel zur Querachse erschreckender Puffer entsteht. Für den Fall, dass der Stirnbereich der Seitenwand im wesentlichen gekrümmt oder halbzylinderförmig ausgebildet ist, kann die Querachse auch als quer verlaufende, gebogene Linie angesehen werden, um welche die ebenfalls als gekrümmte Rolle ausgebildete Abdeckung einen Puffer definiert, welcher den Stirnbereich der Transporteinheit, ähnlich einer Stoßstange eines Pkw, schützt.

In einer Ausführungsform die Abdeckung mittels eines Befestigungsmittels an der Seitenwand lösbar festgelegt, um die Abdeckung im geschlossenen Zustand zu halten, und wobei zumindest ein Fixierungsmittel vorgesehen ist, um die Abdeckung im offenen Zustand zu halten. Zumindest um die Abdeckung im geschlossenen Zustand zu halten ist ein Befestigungsmittel vorgesehen, welches eine lösbare Verbindung zwischen der Abdeckung und der Seitenwand der Transporteinheit herzustellen vermag.

In einer Ausführungsform umfasst das Befestigungsmittel einen Reißverschluss, welcher an der Abdeckung und an der Seitenwand festgelegt ist. In einer ersten bevorzugten Ausführungsform könnte dabei ein im wesentlichen U-förmig ausgebildete durchgehender Reißverschluss vorgesehen sein, wobei an der Seite, vorzugsweise der Oberseite der Abdeckung, an welcher kein Reißverschluss vorgesehen ist die Abdeckung im wesentlichen einstückig mit dem Material des Stirnabschnitt ist der Seitenwand ausgeführt ist. Reißverschlüsse haben sich insbesondere als Dauer feste und stabile Verschluss- und Verbindungsmechanismen herausgestellt und erlauben eine feste Verbindung zwischen der Abdeckung und der Seitenwand im geschlossenen Zustand der Transporteinheit. Weiterhin ist ein Fixierungsmittel vorgesehen, welches die Abdeckung und damit den Puffer im offenen Zustand in Position hält und verhindert, dass der Puffer sich entrollt und wieder als Abdeckung den Ventilationsbereich verdeckt.

In einer Ausführungsform umfasst das Befestigungsmittel zwei Reißverschlüsse, welche im geschlossenen Zustand quer zur Querachse verlaufen, wobei sich jeder der Reißverschlüsse vorzugsweise über die gesamte Länge einer jeweiligen Hochseite der Abdeckung erstreckt. Bei dieser bevorzugten Ausführungsform ist an den sich im Wesentlichen vertikal oder seitlich nach oben erstreckenden Hochseiten der Abdeckung je einen Reißverschluss vorgesehen, während der sich zwischen den Reißverschlüssen erstreckende Bereich der Abdeckung an einer Seite entweder einstückig mit dem Material der Seitenwand verbunden ist oder durch einen weiteren Reißverschluss an der Seitenwand festgelegt ist.

In einer Ausführungsform weist das Befestigungsmittel einen Befestigungsklettverbinder auf, dessen eine Hälfte an der Seitenwand und dessen andere Hälfte an der Abdeckung festgelegt ist. Befestigungsklettverbinder haben sich als kostengünstigere Alternative zu Reißverschlüssen herausgestellt, wobei je nach Anwendungsfall ein Klettverschluss zur Fixierung der Abdeckung im geschlossenen Zustand ausreichend sein kann. Insbesondere bevorzugt ist dabei eine Vielzahl von Befestigungsklettverbindern vorgesehen welche jeweils im Randbereich der Abdeckung zwischen der Seitenwand und der Abdeckung angeordnet sind.

In einer Ausführungsform weist das Fixierungsmittel einen Fixierungsklettverbinder auf, dessen eine Hälfte an der Seitenwand und dessen andere Hälfte an der Abdeckung festgelegt ist. Die Ausbildung des Fixierungsmittel als Fixierungsklettverbinder ist eine einfache und kostengünstige Alternative zu einem Reißverschluss. Vorzugsweise sind dabei zwei oder mehrere Fixierungsklettverbinder vorgesehen welche derart benachbart zur Ventilationsbereich angeordnet sind, dass eine gleichmäßige Fixierung des Puffers im geöffneten Zustand der Abdeckung erreicht werden kann.

In einer Ausführungsform ist die Abdeckung an einer Querseite mit der Seitenwand unlösbar verbunden, oder mittels eines oder des Reißverschlusses lösbar festgelegt. Wie bereits zuvor beschrieben ist in einer Ausführungsform die Abdeckung an einer ihrer seitlichen Kanten einstückig mit dem Material der Seitenwand ausgeführt. Dies erreicht die größtmögliche Sicherheit gegen ein Verlieren der Abdeckung. An den übrigen Kanten kann die Abdeckung dabei vorzugsweise mit einem oder mit einer Vielzahl von Reißverschlüssen oder Befestigungsklettverbindern in den geschlossenen Zustand fixiert werden. Als Alternative zur einstückigen Ausführung der Abdeckung mit der Seitenwand, könnte die Abdeckung auch an einer Kante mittels eines Reißverschlusses lösbar an der Seitenwand festgelegt sein und in den übrigen Bereichen mit Fixierungsklettverbindern an der Seitenwand im geschlossenen Zustand gehalten werden. Dies kann insbesondere dann vorteilhaft sein, wenn die Abdeckung abnehmbar sein soll um sie beispielsweise separat von der Transporteinheit reinigen zu können.

In einer Ausführungsform weist die Seitenwand im Bereich des Stirnabschnitts eine größte Seitenwandstärke auf, wobei der Puffer eine, im Wesentlichen parallel zur Seitenwandstärke gemessene, größte Pufferwandstärke aufweist, wobei die größte Pufferwandstärke zur größten Seitenwandstärke in einem Verhältnis von 0,5 bis 3,5, vorzugsweise von 0,8 bis 3 und besonders bevorzugt von 1 bis 2 steht. Das Dicken Verhältnis zwischen der Pufferwandstärke und der Seitenwandstärke im Stirnbereich zeigt insbesondere, dass der Puffer einen erheblichen Beitrag zur Sicherheit des in der Transporteinheit transportierten Kindes liefern kann. Es versteht sich, dass die Pufferwandstärke auch vom Material Aufbau der Abdeckung abhängt. Mit Vorteil kann in die Abdeckung auch zusätzliches Staub Schaumstoffmaterial integriert werden, welches nach dem Zusammenrollen der Abdeckung als zusätzlicher Dämpfer des Puffers zum Einsatz gelangen kann.

In einer Ausführungsform ist die Transporteinheit als längliche Babyschale ausgebildet und die Seitenwand weist zwei im Wesentlichen geradlinig ausgebildete Seitenabschnitte auf, welche jeweils mit dem Stirnabschnitt und an ihren gegenüberliegenden Enden mit einem zweiten Stirnabschnitt verbunden sind, wobei die Stirnabschnitte im Wesentlichen halbzylinderförmig ausgebildet ist, wobei die Seitenabschnitte und die Stirnabschnitte einen Innenraum mit einer Innenseite umschließen und eine Außenseite der Transporteinheit definieren, wobei die Abdeckung an der Außenseite oder der Innenseite angeordnet ist, oder wobei zwei Abdeckungen vorgesehen sind, von denen eine an der Außenseite und eine an der Innenseite angeordnet ist. Neben der Ausbildung eines Ventilationsbereich es mit einer erfindungsgemäßen Abdeckung an nur einem Stirnabschnitt, ist bevorzugt auch möglich das an beiden Stirnabschnitten, also am Fuß und am Kopfbereich des in der Transporteinheit zu transportierenden Kindes, ein Ventilationsbereich und eine Abdeckung, bzw. ein Puffer vorhanden ist. Dies ist insbesondere dann von Vorteil, wenn die Transporteinheit am Rahmen eines Kindertransportfahrzeuges sowohl vorwärts als auch rückwärtsfahrend eingesetzt werden kann. Darüber hinaus ist es im Rahmen der Erfindung auch denkbar, dass die geradlinig ausgebildete Seitenabschnitte Ventilationsbereich mit entsprechenden Abdeckungen gemäß der vorliegenden Erfindung aufweisen können, wobei diese ebenfalls als Puffer aufgerollt werden können um einen zusätzlichen Schutz im Seitenbereich der Transporteinheit zu bieten.

Weitere Vorteile und Merkmale der vorliegenden Erfindung ergeben sich aus der nachfolgenden Beschreibung mit Bezug auf die beigefügten Figuren. Dabei können einzelne Merkmale, welche nur in einer der Figuren gezeigt sind, auch in Ausführungsformen anderer Figuren zum Einsatz gelangen, sofern sich dies nicht aufgrund technischer Gegebenheiten verbietet oder explizit ausgeschlossen wurde.

Es zeigen:
Fig. 1 - eine erste Ausführungsform einer Transporteinheit;
Fig. 2 - eine weitere Ausführungsform einer Transporteinheit;
Fig. 3 - eine Frontansicht einer Ausführungsform einer Transporteinheit;
Fig. 4 - eine Ansicht eines Innenbereiches einer Ausführungsform einer Transporteinheit;
Fig. 5 - eine perspektivische Ansicht einer Ausführungsform einer Transporteinheit; und
Fig. 6 - eine Ansicht eines Innenbereiches einer weiteren Ausführungsform einer Transporteinheit.

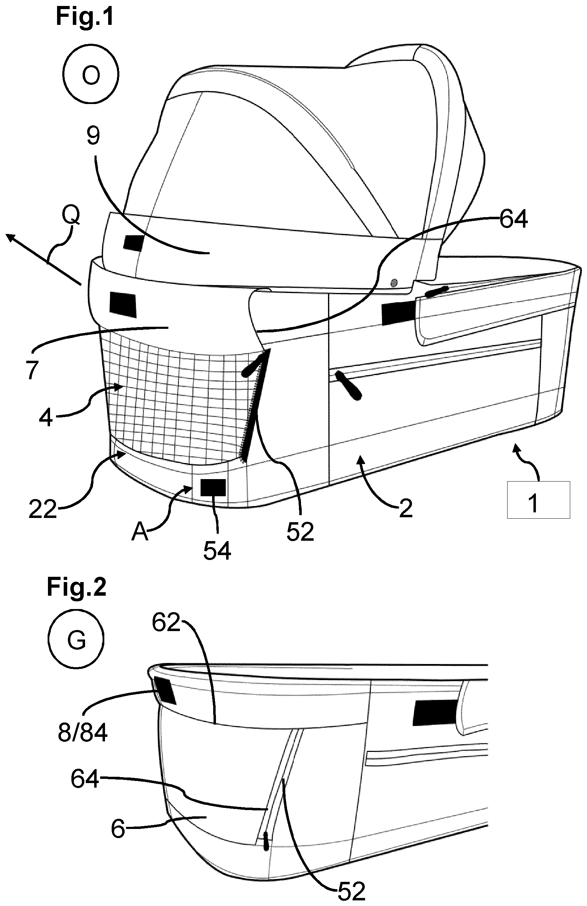

Die in **Figur 1** gezeigte Transporteinheit 1 ist mit Vorteil als Babyschale eines Kinderwagens ausgebildet und weist eine umlaufende Seitenwand 2 auf welche in einem Stirnbereich 22 einen Ventilationsbereich 4 aufweist, welcher insbesondere aus luftdurchlässigerem Gewebe ausgebildet ist, als die übrigen Bereiche der Seitenwand 2. In Figur 1 ist dabei der offene Zustand O des Ventilationsbereich 4 dargestellt, bei welchem die Abdeckung 6 (siehe Fig. 2) nach oben gerollt und als Puffer 7 geformt ist. In dieser Form steht die als Puffer 7 geformte Abdeckung 6 somit nach vorn hin von der Transporteinheit 1 ab. Insbesondere dann, wenn mit dem Kinderwagen und der Transporteinheit 1 versehentlich im Frontbereich ein Hindernis gerammt wird, bietet somit der Puffer 7 zusätzlichen Schutz. Um die Abdeckung 6 in den geschlossenen Zustand G gemäß Figur 2 zu bringen und in diesem Zustand zu sichern, ist jeweils an den Hochseiten 64 ein als Reißverschluss 52 ausgebildetes Befestigungsmittel 5 vorgesehen. Zusätzlich dargestellt ist eine zusätzlich oder alternativ vorgesehene Ausführungsform eines Befestigungsmittels 5, bei welchem dieses als Befestigungsklettverbinder 54 ausgeführt ist.

In **Figur 2** ist das in Figur 1 verdeckte Fixierungsmittel 8 erkennbar, an welchem die zusammengerollte Abdeckung 6 in der Form als Puffer 7 in der offenen Stellung gemäß Figur 1 festgelegt ist. Zusätzlich oder alternativ kann die Abdeckung 6 auch unter den unteren Rand der Haube 9 gesteckt und dort fixiert werden. Die Haube 9 ist eine bevorzugte weitere Baugruppe, welcher mit Vorteil an der Transporteinheit 1 festlegbar ist und besonders bevorzugt einen Schutz vor Witterung und Sonne für das zu transportierenden Kind bereitstellt. Gemäß einer weiteren Alternative, könnte das Fixierungsmittel 8 auch als Gummischlaufe oder eine Vielzahl von Gummischlaufen ausgeführt sein, welche jeweils in der Nähe der Hochseite 64 die Abdeckung 6 in ihrer zusammengerollten oder gefalteten Form als Puffer 7 hält. Bei der in den Figuren 1 und 2 dargestellten Ausführungsform ist die Abdeckung 6 vorzugsweise an der Außenseite A der Seitenwand 2 angeordnet und festgelegt.

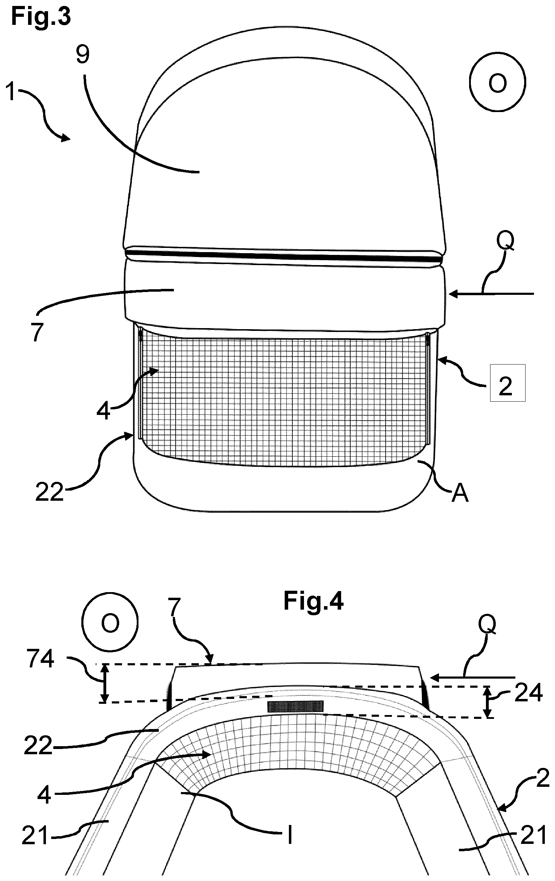

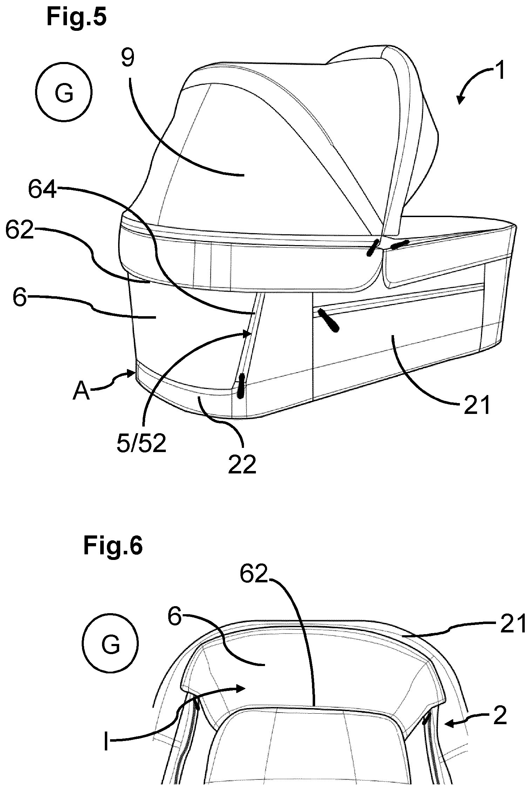

**Figur 3** zeigt eine Frontansicht einer Ausführungsform der Transporteinheit 1 im offenen Zustand O, wobei die als Puffer 7 zusammengerollte Abdeckung 6 vorzugsweise unter dem unteren Rand der Haube 9 eingeschoben und dort gehalten ist. An den sich im Wesentlichen vertikal erstreckenden, seitlichen Bereichen des Ventilationsbereiches 4 ist die Hälfte der jeweiligen Reißverschlüsse 52 zu erkennen, mit welchem die Hochseiten 64 der Abdeckung 6 im geschlossenen Zustand G (siehe Fig. 5) an der Seitenwand 2 festlegbar sind. Weiterhin ist in dieser Ansicht besonders gut die Orientierung der Querrichtung Q erkennbar, um welche, oder parallel zu welcher, die Abdeckung 6 gerollt oder gefaltet wird, um in die Form eines Puffers 7 zu gelangen.

**Figur 4** zeigt eine Ansicht eines Bereiches der Transporteinheit 1 gesehen von der Innenseite I der Transporteinheit 1. Dabei ist insbesondere die im Wesentlichen halbkreisförmige, oder halbzylinderförmige Querschnittsgeometrie der Stirnseite 22 erkennbar. Weiterhin ist die Pufferwandstärke 74 schematisch angedeutet, welche in dieser Ausführungsform vorzugsweise etwas größer als die Seitenwandstärke 24 ist und insbesondere in einem Verhältnis von 1,2 bis 1,5 zur Seitenwandstärke 24 steht. In dieser Ausführungsform erstreckt sich der Ventilationsbereich 4 vorzugsweise über die gesamte Breite des Stirnabschnitts 22 und grenzt somit unmittelbar an die Seitenabschnitte 21 der Seitenwand 2. Dies sorgt für eine größtmögliche Belüftung des Innenbereiches der Transporteinheit 1.

**Figur 5** zeigt die in Figur 3 gezeigte Ausführungsform der Transporteinheit 1 im geschlossenen Zustand G. Dabei sind die an den Hochseiten 64 der Abdeckung 6 angeordneten Reißverschlüsse 52 bis nach unten geschlossen. Bevorzugt können zusätzlich an der der oberen Querseite 62 gegenüberliegenden Unterseite der Abdeckung 6 Befestigungsklettverbinder 54 vorhanden sein, welche in dieser Ausführungsform somit von der Abdeckung 6 verdeckt sind.

**Figur 6** schließlich zeigt eine weitere alternative Ausführungsform einer Transporteinheit 1, wobei die Abdeckung 6 an der Innenseite I der Seitenwand 2 angeordnet und festgelegt ist. Figur 6 zeigt dabei den geschlossenen Zustand G, in welchem die Abdeckung 6 den Ventilationsbereich 4 vorzugsweise vollständig abdeckt. Es versteht sich, dass eine innen angeordnete Abdeckung 6 sowohl alternativ als auch zusätzlich zu einer auf der Außenseite angeordneten Abdeckung 6 gemäß einer der vorhergehenden Ausführungsformen Verwendung finden kann.

Auf diese Weise kann insbesondere die Temperaturregulation für den Innenbereich der Transporteinheit 1 verbessert werden und es steht zusätzliches schützendes Material zur Ausbildung sowohl eines inneren als auch eines äußeren Puffers 7 zur Verfügung.

### Bezugszeichenliste:

- 1 -: Transporteinheit
- 2 -: Seitenwand
- 4 -: Ventilationsbereich
- 5 -: Befestigungsmittel
- 6 -: Abdeckung
- 7 -: Puffer
- 8 -: Fixierungsmittel
- 9 -: Haube
- 21 -: Seitenabschnitt
- 22 -: Stirnabschnitt
- 24 -: Seitenwandstärke
- 52 -: Reißverschluss
- 54 -: Befestigungsklettverbinder
- 62 -: Querseite
- 64 -: Hochseite
- 74 -: Pufferwandstärke
- 84 -: Fixierungsklettverbinder
- A -: Außenseite
- G -: geschlossener Zustand
- I -: Innenseite
- O -: offener Zustand
- Q -: Querachse

## Patentansprüche

1. Transporteinheit (1), insbesondere zum Einsatz in einem Kindertransportsystem,
aufweisend eine Seitenwand (2) mit einem ersten Stirnabschnitt (22),
wobei vorzugsweise am ersten Stirnabschnitt (22) ein Ventilationsbereich (4) vorgesehen ist, welcher luftdurchlässiger ausgebildet ist, als die benachbarten Bereiche der Seitenwand (2),
wobei eine Abdeckung (6) an der Seitenwand (2) festlegbar oder festgelegt ist, welche in einem geschlossenen Zustand (G) den Ventilationsbereich (4) abdeckt und in einem offenen Zustand (O) den Ventilationsbereich (4) zumindest bereichsweise freigibt,
wobei die Abdeckung (6) im offenen Zustand (O) derart an der Seitenwand (2), vorzugsweise am Stirnabschnitt (22), geformt und festgelegt ist, dass sie einen Puffer (7) bildet.

2. Transporteinheit (1) nach Anspruch 1,
wobei die Abdeckung (6) im Wesentlichen um eine Querachse (Q) gerollt und/oder gefaltet ist, um als Puffer (7) ausgebildet zu sein.

3. Transporteinheit (1) nach einem der vorhergehenden Ansprüche,
wobei sich der Ventilationsbereich (4) über die gesamte Breite des Stirnabschnitts (22) erstreckt,
wobei der Ventilationsbereich (4) unmittelbar an die Seitenabschnitte (21) der Seitenwand (2) grenzt.

4. Transporteinheit (1) einem der vorhergehenden Ansprüche,
wobei die Abdeckung (6) mittels eines Befestigungsmittels (5) an der Seitenwand (2) lösbar festgelegt ist, um die Abdeckung (6) im geschlossenen Zustand (G) zu halten.

5. Transporteinheit (1) einem der vorhergehenden Ansprüche,
wobei zumindest ein Fixierungsmittel (8) vorgesehen ist, um die Abdeckung (6) im offenen Zustand (O) zu halten.

6. Transporteinheit (1) nach Anspruch 4 oder 5,
wobei das Befestigungsmittel (5) einen Reißverschluss (52) umfasst, welcher an der Abdeckung (6) und an der Seitenwand (2) festgelegt ist.

7. Transporteinheit (1) nach einem der Ansprüche 4 bis 6,
wobei das Befestigungsmittel (5) zwei Reißverschlüsse (52) umfasst, welche im geschlossenen Zustand (G) quer zur Querachse (Q) verlaufen, wobei sich jeder der Reißverschlüsse (52) vorzugsweise über die gesamte Länge einer jeweiligen Hochseite (64) der Abdeckung (6) erstreckt.

8. Transporteinheit (1) nach einem der Ansprüche 4 bis 7,
wobei das Befestigungsmittel (5) einen Befestigungsklettverbinder (54) aufweist, dessen eine Hälfte an der Seitenwand (2) und dessen andere Hälfte an der Abdeckung (6) festgelegt ist.

9. Transporteinheit (1) nach einem der Ansprüche 4 bis 7,
wobei das Befestigungsmittel (5) eine Vielzahl von Befestigungsklettverbindern (54) umfasst, welche jeweils im Randbereich der Abdeckung (6) zwischen der Seitenwand (2) und der Abdeckung (6) angeordnet sind.

10. Transporteinheit (1) nach einem der Ansprüche 5 bis 9,
wobei das Fixierungsmittel (8) einen Fixierungsklettverbinder (84) aufweist, dessen eine Hälfte an der Seitenwand (2) und dessen andere Hälfte an der Abdeckung (6) festgelegt ist.

11. Transporteinheit (1) nach einem der vorhergehenden Ansprüche,
wobei die Abdeckung (6) an einer Querseite (62) mit der Seitenwand unlösbar verbunden ist, oder mittels eines oder des Reißverschlusses (52) lösbar festgelegt ist.

12. Transporteinheit (1) nach einem der vorhergehenden Ansprüche,
wobei die Seitenwand (2) im Bereich des Stirnabschnitts (22) eine größte Seitenwandstärke (24) aufweist,
wobei der Puffer (7) eine, im Wesentlichen parallel zur Seitenwandstärke (24) gemessene, größte Pufferwandstärke (74) aufweist,
wobei die größte Pufferwandstärke (74) zur größten Seitenwandstärke (24) in einem Verhältnis von 0,5 bis 3,5, vorzugsweise von 0,8 bis 3 und besonders bevorzugt von 1 bis 2 steht.

13. Transporteinheit (1) nach einem der vorhergehenden Ansprüche,
wobei die Transporteinheit (1) als längliche Babyschale ausgebildet ist und die Seitenwand (2) zwei im Wesentlichen geradlinig ausgebildete Seitenabschnitte (21) aufweist, welche jeweils mit dem Stirnabschnitt (22) und an ihren gegenüberliegenden Enden mit einem zweiten Stirnabschnitt (22) verbunden sind,
wobei die Stirnabschnitte (22) im Wesentlichen halbzylinderförmig ausgebildet ist,
wobei die Seitenabschnitte (21) und die Stirnabschnitte (22) einen Innenraum mit einer Innenseite (I) umschließen und eine Außenseite (A) der Transporteinheit (1) definieren.

14. Transporteinheit (1) nach einem der vorhergehenden Ansprüche,
wobei die Abdeckung (6) an der Außenseite (A) oder der Innenseite (I) angeordnet ist, oder
wobei zwei Abdeckungen (6) vorgesehen sind, von denen eine an der Außenseite (A) und eine an der Innenseite (I) angeordnet ist.

15. Transporteinheit (1) nach einem der vorhergehenden Ansprüche,
wobei die Transporteinheit (1) als weitere Baugruppe eine Haube (9) aufweist, welche an der Transporteinheit (1) festlegbar ist.
